# EUROPEAN PATENT SPECIFICATION

(11) **EP 3 940 243 B1**
(45) Date of publication and mention of the grant of the patent: **30.10.2024**
(21) Application number: 21185860.0
(22) Date of filing: 15.07.2021
(51) Int. Cl.: F04D 25/08, F04D 29/58, F04B 35/01, F04B 35/04, F04B 35/06, F04B 39/06, F04B 39/12

(54) **AIR INFLATOR DEVICE**
LUFTAUFBLASVORRICHTUNG
DISPOSITIF GONFLEUR À AIR

(30) Priority: 15.07.2020 TW 109123963
(43) Date of publication of application: 19.01.2022
(73) Proprietor: Chou, Wen-San, Tainan City (TW); Chou, Cheng-Hsien, Tainan City (TW)
(72) Inventor: Chou, Wen-San, Tainan City (TW); Chou, Cheng-Hsien, Tainan City (TW)
(74) Representative: Becker Kurig & Partner Patentanwälte mbB

(56) References cited:
- DE-A1- 10 127 920
- DE-U1- 202015 103 097
- JP-A- 2005 256 750

## Description

### FIELD OF THE INVENTION

The present invention relates to an air inflator device which dissipated heat and prolongs a service life of the air compressor.

### BACKGROUND OF THE INVENTION

A conventional air compressor has a small size so as to be portable onto a vehicle, thus inflating air to tires or air cushions. The air compressor is started by using a portable DC power supply or being connected with a socket of a car cigarette lighter.

The air compressor is received in an accommodation box and is driven by a motor to actuate a piston of a cylinder to move back and forth, such that the air is compressed and delivered to the air cushion and the tires, thus inflating the air cushions and the tires.

When the motor drives the piston of the cylinder to move back and forth, a high-temperature heat accumulates in a housing of the motor, because a rotor and the armature of a armature core, a armature winding and a commutator generate heat after the motor drives the rotor to rotate, and the commutator and the carbon brush have a friction to cause high temperature, thus gathering carbon of the carbon brush to interfere electric currents, reducing magnetic force of magnets, and have poor rotating efficiency of the motor.

Air inflator equipment is applied to inflate air and feed sealant to a broken tire in a short time, but the heat resulting from a rotation of the rotor gathers in the housing of the motor to damage an insulation layer of the armature winding, thus burning the motor.

In addition, the air compressor is received in the accommodation box by multiple limitation bars or a fixing plate, however, it will case poor heat dissipation to damage the air compressor.

Patent application publication DE 101 27 920 A1 describes a compressor, for the production of a medical aerosol, with an outlet port on the housing.

The present invention has arisen to mitigate and/or obviate the afore-described disadvantages.

### SUMMARY OF THE INVENTION

The primary aspect of the present invention is to provide an air inflator device having the features of claim 1. Further embodiments are subject-matter of the dependent claims.

The air inflator device according to the invention contains an accommodation box and an air compressor, wherein the accommodation box includes a cap and a case, and the air compressor is received in the cap and the case, an air guiding mechanism is also received in the accommodation box and is configured to frame a cooling fan which is rotatably with a motor of the air compressor, such that the air guiding mechanism is configured to collect and guide air so that the cooling fan rotates to guide the air to the air compressor quickly, thus dissipating heat and prolonging a service life of the air compressor.

Further aspect of the present invention is to provide an air inflator device which contains the air guiding mechanism configured to collect and guide air so that the cooling fan rotates to guide the air to the air compressor, thus dissipating heat and prolonging a service life.

Another aspect of the present invention is to provide an air inflator device which contains an air guiding mechanism received in the accommodation box and configured to frame the cooling fan which is rotatably with a motor of the air compressor, thus avoiding a strike of the cooling fan.

### BRIEF DESCRIPTION OF THE DRAWINGS

FIG. 1 is a perspective view showing the assembly of an air inflator device according to a first embodiment of the present invention.
FIG. 2 is a perspective view showing the assembly of a part of the air inflator device according to the first embodiment of the present invention.
FIG. 3 is a cross sectional view showing the assembly of the air inflator device according to the first embodiment of the present invention.
FIG. 4 is a side plan view showing the operation of the air inflator device according to the first embodiment of the present invention.
FIG. 5 is a perspective view showing the assembly of an air inflator device according to a second embodiment of the present invention.
FIG. 6 is a perspective view showing the assembly of a part of the air inflator device according to the second embodiment of the present invention.
FIG. 7 is a cross sectional view showing the assembly of the air inflator device according to the second embodiment of the present invention.
FIG. 8 is a side plan view showing the operation of the air inflator device according to the second embodiment of the present invention.

### DETAILED DESCRIPTION OF THE PREFERRED EMBODIMENTS

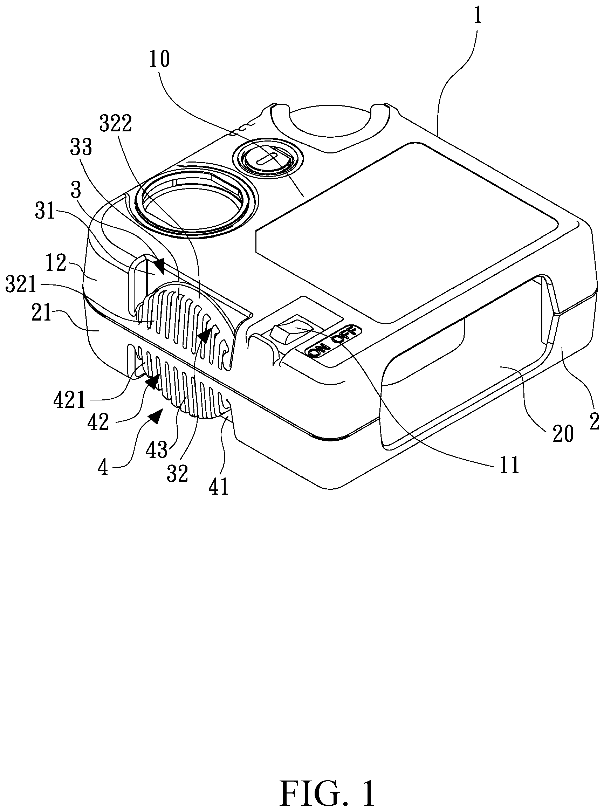

With reference to FIGS. 1-4, an air inflator device according to a first embodiment of the present invention comprises: an accommodation box and an air compressor 9, the accommodation box includes a cap 1 and a case 2, and the air compressor 9 is received in the cap 1 and the case 2. Furthermore, an air guiding mechanism is also received in the accommodation box and is configured to frame a cooling fan 91 which is rotatably with a motor 92 of the air compressor 9. The air guiding mechanism is configured to collect and guide air so that the cooling fan 91 rotates to guide the air to the air compressor 9 quickly, thus dissipating heat and prolonging a service life of the air compressor 9.

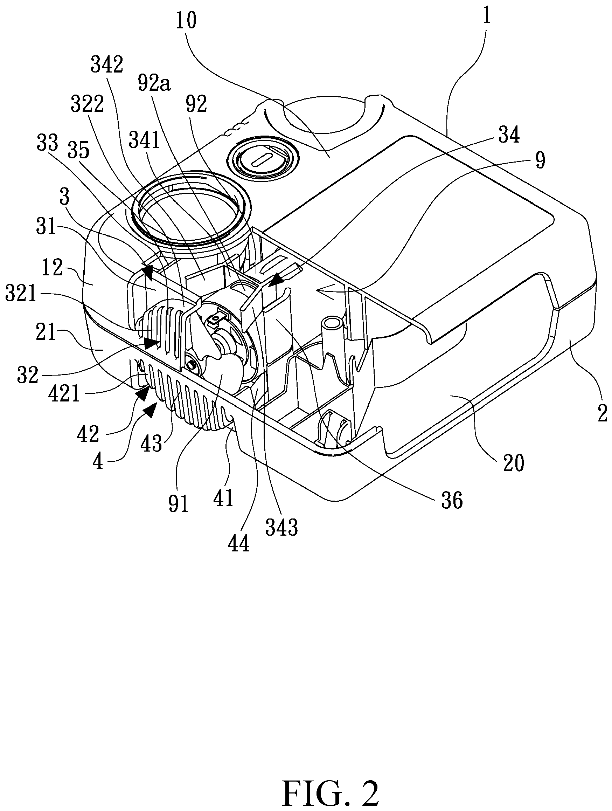

Referring to FIGS. 1 and 2, the cap 1 is formed in a rectangular frame shape and includes a first panel 10 formed on a top of the cap 1, a button 11 located beside the first panel 10 and configured to turn on/off the air compressor 9, a fluid guide structure which has a first directing portion 3, and the first directing portion 3 has a first recess 31 defined on a side of a first peripheral fringe 12 of the cap 1, and a first semicircular cover 32 extending on the first recess 31, wherein the first semicircular cover 32 has a first rib 321 and a first arcuate fence 322. The cap 1 further includes multiple first elongated orifices 33 separately formed on the first arcuate fence 322, and the first semicircular cover 32 is integrally formed with the cap 1.

Referring to FIGS. 1 and 2, the case 2 is formed in a rectangular frame shape and includes a fluid guide structure has a second directing portion 4 the same as the first directing portion 3. The second directing portion 4 has a second recess 41 defined on a side of a second peripheral fringe 21 of the case 2 below a second panel 20 of a top of the case 2, and a second semicircular cover 42 extending on the second recess 41, wherein the second semicircular cover 42 has a second rib 421 and a second arcuate fence 422. The cap 1 further includes multiple first elongated orifices 43 separately formed on the first arcuate fence 422, and the second semicircular cover 42 is integrally formed with the case 2.

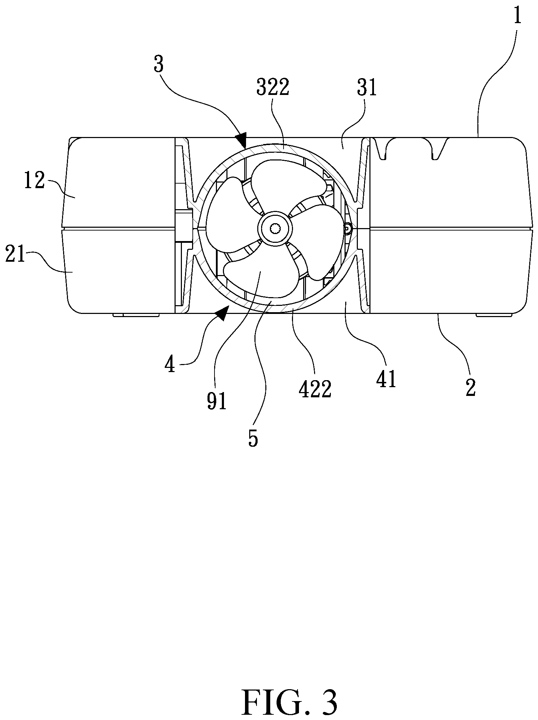

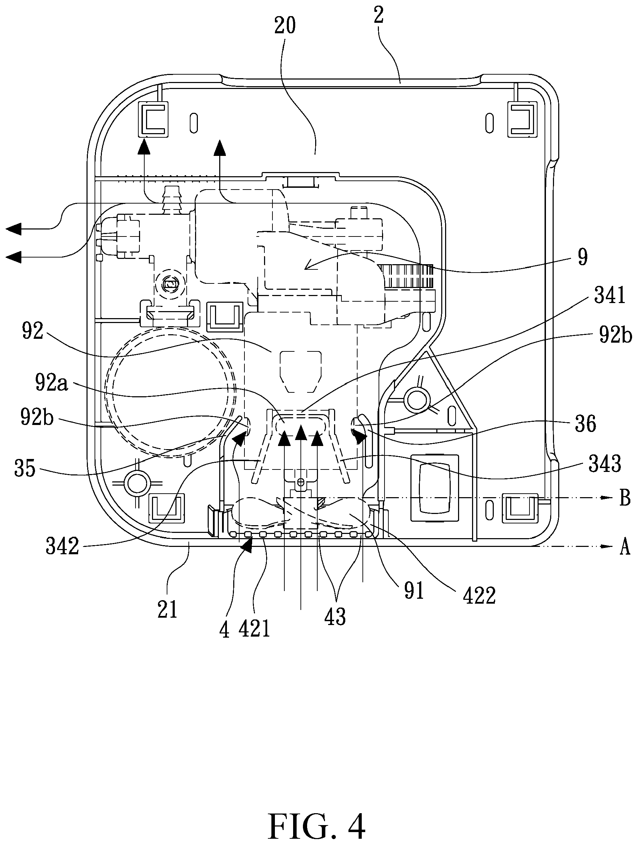

As shown in FIG. 3, after the air compressor 9 is received in the cap 1 and the case 2, the first directing portion 3 of the cap 1 and the second directing portion 4 of the case 2 frame the cooling fan 91, and the cooling fan 91 is rotatably with the motor 92 of the air compressor 9, thus avoiding a strike of the cooling fan 91. Furthermore, a flowing orifice 5 is defined by the first directing portion 3 and the second directing portion 4. As illustrated in FIG. 4, the air compressor 9 is received in the accommodation box and is dissipated heat. When the cooling fan 91 rotates to guide external air to flow out of the flowing orifice 5 from the multiple first elongated orifices 33 and the multiple second elongated orifice 43 via the first directing portion 3 and the second directing portion 4 (as shown in FIG. 3), thus collecting and guiding the external air.

With reference to FIG. 4, the air compressor 9 is received in the accommodation box, the cooling fan 91 is opposite to the accommodation box, wherein a first datum line A is defined between the first peripheral fringe 12 and the second peripheral fringe 21, a back line of the cooling fan 91 located in an air flowing zone is defined as a second datum line B, wherein the multiple first elongated orifices 33 and the multiple second elongated orifices 43 are located in an area between the first datum line A and the second datum line B. When the cooling fan 91 rotates, the external air is drawn into the accommodation box from the multiple first elongated orifices 33 and the multiple second elongated orifices 43. In this embodiment, the multiple first elongated orifices 33 and the multiple second elongated orifices 43 are located on the first rib 321 and the second rib 421 in the area between the first datum line A and the second datum line B. Alternatively, the multiple first elongated orifices 33 and the multiple second elongated orifices 43 are defined on other portions of the accommodation box when a front end of the cooling fan 91 is defined in the area between the first datum line A and the second datum line B.

The first panel 10 of the cap 1 has a first fixing extension 34 extending on an inner wall thereof and configured to guide the air and to fix the motor 92 of the air compressor 9, and the second panel 20 of the case 2 has a second fixing extension 44 extending on an inner wall thereof and configured to guide the air and to fix the motor 92 of the air compressor 9. The first fixing extension 34 has a tilted face 341 formed on a center thereof, a first tilted fence 342 extending from a first end of the tilted face 341 to the first peripheral fringe 12, a second tilted fence 343 extending from a second end of the tilted face 341 to the first peripheral fringe 12, as shown in FIG. 4, wherein the tilted face 341, the first tilted fence 342, and the second tilted fence 343 guide the air forward smoothly. Since a structure of the second fixing extension 44 is identical to that of the first fixing extension 34, the structure of the second fixing extension 44 is not shown.

The first panel 10 of the cap 1 has a first arcuate sheet 35 extending from an inner wall thereof, and the second panel 20 of the case 2 has a second arcuate sheet 36 extending from an inner wall thereof and corresponding to the first arcuate sheet 35, wherein a third arcuate sheet of the case is not shown.

The first fixing extension 34 of the cap 1 and the second fixing extension 44 of the case 2 abut against a first vent 92a of the motor 92 so that the tilted face 341 of the first fixing extension 34 and the second fixing extension 44 guide the air to the first vent 92a of the motor 92 directly, the first arcuate sheet 35 and the second arcuate sheet 36 guide the air to a second vent 92b, and the air flow into the motor 92 from the first vent 92a and the second 92b, hence a heat resulting from a friction of a carbon brush and a commutator of the motor 92 and electric currents of armature winding are dissipated.

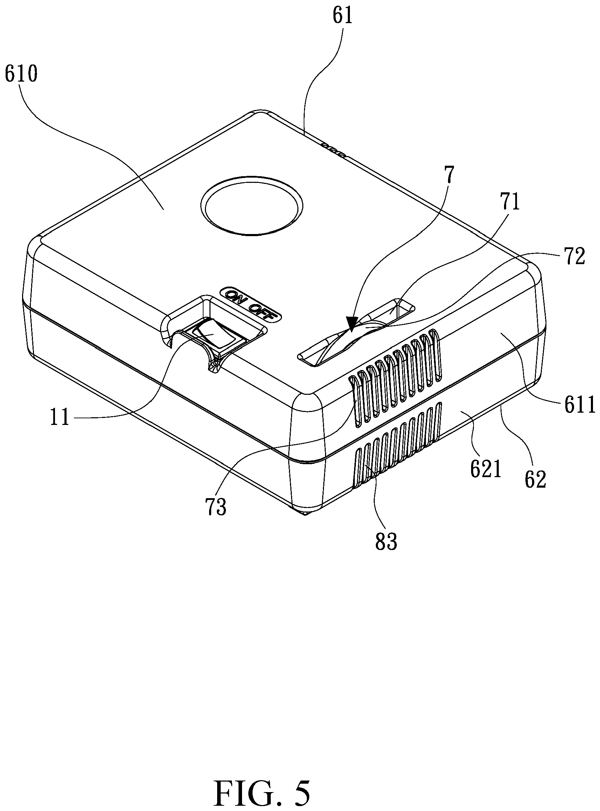

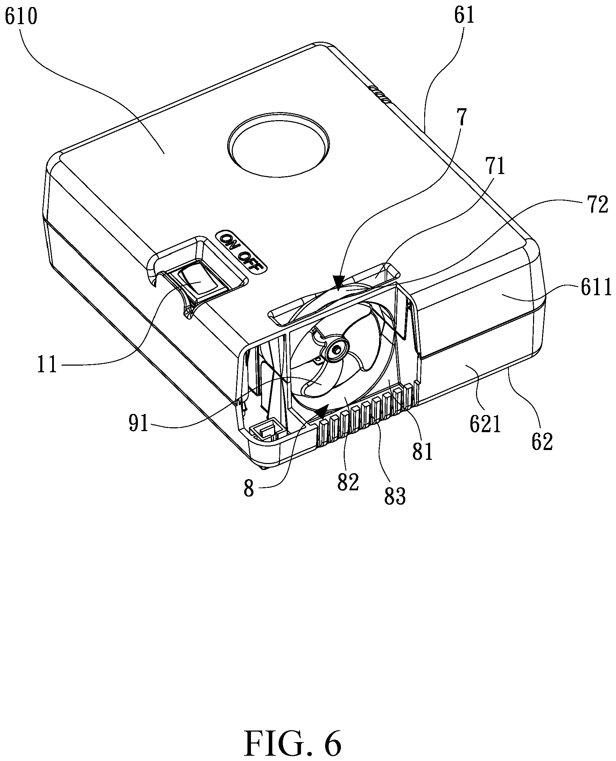

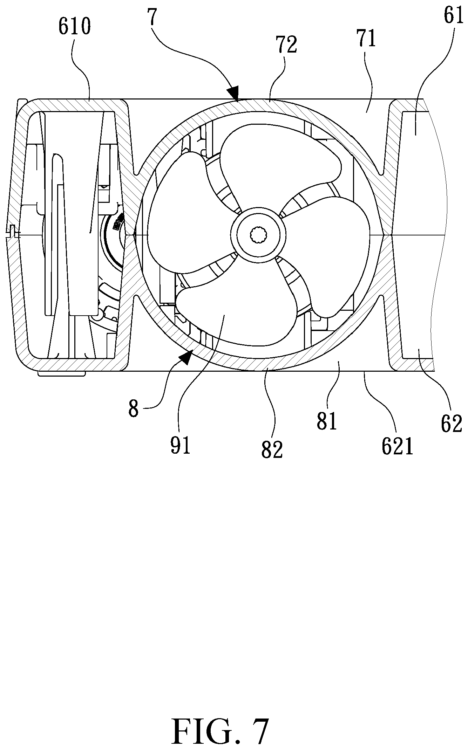

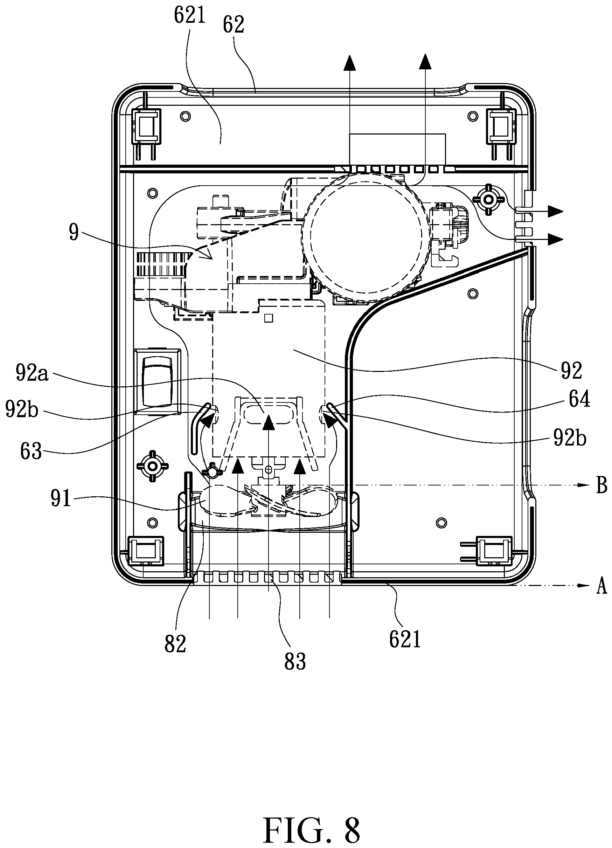

With reference to FIGS. 5-8, an air inflator device according to a second embodiment of the present invention comprises: a first recess 71 of a first directing portion 7 defined on a first panel 610 of a cap 61, and a first semicircular cover 72 integrally formed on the first recess 71, wherein the first semicircular cover 72 is arcuate, and the cap 1 further includes multiple first elongated orifices 73 separately formed on a side of a first peripheral fringe 611 of the first panel 610, wherein the first peripheral fringe 611 faces the first directing portion 7.

A structure of the second directing portion 8 is identical to that of the first directing portion 7, wherein the second directing portion 8 includes a second recess 81 defined on a second panel 620 of a case 62, and a second semicircular cover 82 integrally formed on the second recess 81, wherein the second semicircular cover 82 is arcuate, and multiple second elongated orifices 83 are separately formed on a side of a second peripheral fringe 621 of the second panel 620, wherein the second peripheral fringe 621 faces the second directing portion 8.

The first panel 610 of the cap 61 has a first arcuate sheet 63 extending from an inner wall thereof, and the second panel 620 of the case 62 has a second arcuate sheet 64 extending from an inner wall thereof and corresponding to the first arcuate sheet 63, wherein a third arcuate sheet of the case 62 is not shown.

Accordingly, the air inflator device of the present invention contains the accommodation box and the air compressor 9 received in the accommodation box, and the air guiding mechanism is also received in the accommodation box and is configured to frame the cooling fan 91 which is rotatably with the motor 92 of the air compressor 9. The air guiding mechanism is configured to collect and guide the air so that the cooling fan 91 rotates to guide the air to the air compressor 9, thus dissipating the heat and prolonging the service life of the air compressor 9.

## Claims

1. An air inflator device comprising: an accommodation box and an air compressor (9), the accommodation box including a cap (1, 61) and a case (2, 62), and the air compressor (9) being received in the cap (1, 61) and the case (2, 62), an air guiding mechanism being also received in the accommodation box and being configured to frame a cooling fan (91) which is rotatably with a motor (92) of the air compressor (9), wherein
the cap (1, 61) and the case (2, 62) form a flowing orifice (5),
the cap (1, 61) comprises a fluid guide structure which has a first directing portion (3, 7),
the case (2, 62) comprises a fluid guide structure which has a second directing portion (4, 8) the same as the first directing portion (3, 7), **characterized in that** the first directing portion (3, 7) has a first recess (31, 71), and a first semicircular cover (32, 72) extends on the first recess (31, 71) and the second directing portion (4, 8) has a second recess (41, 81), and a second semicircular cover (42, 82) extends on the second recess (41, 81), wherein
the first semicircular cover (32, 72) and the second semicircular cover (42, 82) of the air guiding mechanism are configured to collect and guide air so that the cooling fan (91) rotates to guide the air to the air compressor (9), thus dissipating heat of the air compressor (9).

2. The air inflator device as claimed in claim 1, **characterized in that** the cap (1) is formed in a rectangular frame shape and includes a first panel (10) formed on a top of the cap (1), a button (11) located beside the first panel (10) and configured to turn on/off the air compressor (9), and a fluid guide structure which has a first directing portion (3).

3. The air inflator device as claimed in claim 2, **characterized in that** the first recess (31) is defined on a side of a first peripheral fringe (12) of the cap (1) and the first semicircular cover (32) has a first rib (321) and a first arcuate fence (322), wherein the cap (1) further includes multiple first elongated orifices (33) separately formed on the first arcuate fence (322), and the first semicircular cover (32) is integrally formed with the cap (1).

4. The air inflator device as claimed in claim 3, **characterized in that** the case (2) is formed in a rectangular frame shape, and the second recess (41) is defined on a side of the second peripheral fringe (21) of the case (2), the second recess (41) is below a second panel (20) of a top of the case (2), wherein the second semicircular cover (42) has a second rib (421) and a second arcuate fence (422); the cap (1) further includes multiple first elongated orifices (43) separately formed on the first arcuate fence (422), and the second semicircular cover (42) is integrally formed with the case (2).

5. The air inflator device as claimed in claim 4, **characterized in that** the air compressor (9) is received in the cap (1) and the case (2), thus avoiding a strike of the cooling fan (91).

6. The air inflator device as claimed in claim 5, **characterized in that** a first datum line (A) is defined between the first peripheral fringe (12) and the second peripheral fringe (21), a back line of the cooling fan (91) located in an air flowing zone is defined as a second datum line (B); wherein the multiple first elongated orifices (33) and the multiple second elongated orifices (43) are located in an area between the first datum line (A) and the second datum line (B); when the cooling fan (91) rotates, the external air is drawn into the accommodation box from the multiple first elongated orifices (33) and the multiple second elongated orifices (43).

7. The air inflator device as claimed in claim 4, **characterized in that** the first panel (10) of the cap (1) has a first fixing extension (34) extending on an inner wall thereof and configured to guide the air and to fix the motor (92) of the air compressor (9), and the second panel (20) of the case (2) has a second fixing extension (44) extending on an inner wall thereof and configured to guide the air and to fix the motor (92) of the air compressor (9); the first fixing extension (34) has a tilted face (341) formed on a center thereof, a first tilted fence (342) extending from a first end of the tilted face (341) to the first peripheral fringe (12), a second tilted fence (343) extending from a second end of the tilted face (341) to the first peripheral fringe (12), wherein the tilted face (341), the first tilted fence (342), and the second tilted fence (343) guide the air forward, wherein a structure of the second fixing extension (44) is identical to that of the first fixing extension (34).

8. The air inflator device as claimed in claim 7, **characterized in that** the first panel (10) of the cap (1) has a first arcuate sheet (35) extending from an inner wall thereof, and the second panel (20) of the case (2) has a second arcuate sheet (36) extending from an inner wall thereof and corresponding to the first arcuate sheet (35).

9. The air inflator device as claimed in claim 2, **characterized in that** the first recess (71) of the first directing portion (7) is defined on a first panel (610) of the cap (61), and the first semicircular cover (72) is integrally formed on the first recess (71), wherein the first semicircular cover (72) is arcuate, the cap (1) further includes multiple first elongated orifices (73) separately formed on a side of a first peripheral fringe (611) of the first panel (610), and the first peripheral fringe (611) faces the first directing portion (7).

10. The air inflator device as claimed in claim 9, **characterized in that** the case (2) is formed in a rectangular frame shape and includes a fluid guide structure having the second directing portion (4) the same as the first directing portion (3), wherein a structure of the second directing portion (8) is identical to that of the first directing portion (7), wherein the second directing portion (8) includes the second recess (81) defined on a second panel (620) of the case (62), and the second semicircular cover (82) integrally formed on the second recess (81), wherein the second semicircular cover (82) is arcuate, and multiple second elongated orifices (83) are separately formed on a side of a second peripheral fringe (621) of the second panel (620), wherein the second peripheral fringe (621) faces the second directing portion (8).

## Patentansprüche

1. Luftaufblasvorrichtung, umfassend: einen Aufnahmekasten und einen Luftkompressor (9), wobei der Aufnahmekasten eine Kappe (1, 61) und ein Gehäuse (2, 62) enthält und der Luftkompressor (9) in der Kappe (1, 61) und dem Gehäuse (2, 62) aufgenommen ist, wobei ein Luftführungsmechanismus ebenfalls in dem Aufnahmekasten aufgenommen ist und so konfiguriert ist, dass er ein Kühlgebläse (91) einrahmt, das mit einem Motor (92) des Luftkompressors (9) drehbar ist, wobei
die Kappe (1, 61) und das Gehäuse (2, 62) eine Durchflussöffnung (5) bilden,
die Kappe (1, 61) eine Fluidführungsstruktur umfasst, die einen ersten Leitabschnitt (3, 7) aufweist,
das Gehäuse (2, 62) eine Fluidführungsstruktur umfasst, die einen zweiten Leitabschnitt (4, 8) aufweist, der gleich dem ersten Leitabschnitt (3, 7) ist, **dadurch gekennzeichnet, dass** der erste Leitabschnitt (3, 7) eine erste Ausnehmung (31, 71) aufweist und sich eine erste halbkreisförmige Abdeckung (32, 72) auf der ersten Ausnehmung (31, 71) erstreckt, und der zweite Leitabschnitt (4, 8) eine zweite Ausnehmung (41, 81) aufweist und sich eine zweite halbkreisförmige Abdeckung (42, 82) auf der zweiten Ausnehmung (41, 81) erstreckt, wobei
die erste halbkreisförmige Abdeckung (32, 72) und die zweite halbkreisförmige Abdeckung (42, 82) des Luftführungsmechanismus so konfiguriert sind, dass sie Luft sammeln und leiten, so dass sich das Kühlgebläse (91) dreht, um die Luft zu dem Luftkompressor (9) zu leiten, wodurch die Wärme des Luftkompressors (9) abgeleitet wird.

2. Luftaufblasvorrichtung gemäß Anspruch 1, **dadurch gekennzeichnet, dass** die Kappe (1) in einer rechteckigen Rahmenform ausgebildet ist und eine erste Platte (10), die auf einer Oberseite der Kappe (1) ausgebildet ist, einen Knopf (11), der sich neben der ersten Platte (10) befindet und so konfiguriert ist, dass er den Luftkompressor (9) ein- und ausschaltet, und eine Fluidführungsstruktur umfasst, die einen ersten Leitabschnitt (3) aufweist.

3. Luftaufblasvorrichtung gemäß Anspruch 2, **dadurch gekennzeichnet, dass** die erste Ausnehmung (31) auf einer Seite eines ersten Umfangsrandes (12) der Kappe (1) definiert ist und die erste halbkreisförmige Abdeckung (32) eine erste Rippe (321) und eine erste bogenförmige Umrandung (322) aufweist, wobei die Kappe (1) ferner mehrere erste längliche Öffnungen (33) aufweist, die separat an der ersten bogenförmigen Umrandung (322) ausgebildet sind, und die erste halbkreisförmige Abdeckung (32) einstückig mit der Kappe (1) ausgebildet ist.

4. Luftaufblasvorrichtung gemäß Anspruch 3, **dadurch gekennzeichnet, dass** das Gehäuse (2) in einer rechteckigen Rahmenform ausgebildet ist und die zweite Ausnehmung (41) auf einer Seite des zweiten Umfangsrandes (21) des Gehäuses (2) definiert ist, wobei sich die zweite Ausnehmung (41) unterhalb einer zweiten Platte (20) einer Oberseite des Gehäuses (2) befindet, wobei die zweite halbkreisförmige Abdeckung (42) eine zweite Rippe (421) und eine zweite bogenförmige Umrandung (422) aufweist; die Kappe (1) ferner mehrere erste längliche Öffnungen (43) aufweist, die separat an der ersten bogenförmigen Umrandung (422) ausgebildet sind, und die zweite halbkreisförmige Abdeckung (42) einstückig mit dem Gehäuse (2) ausgebildet ist.

5. Luftaufblasvorrichtung gemäß Anspruch 4, **dadurch gekennzeichnet, dass** der Luftkompressor (9) in der Kappe (1) und dem Gehäuse (2) aufgenommen ist, wodurch ein Anschlagen des Kühlgebläses (91) vermieden wird.

6. Luftaufblasvorrichtung gemäß Anspruch 5, **dadurch gekennzeichnet, dass** eine erste Bezugslinie (A) zwischen dem ersten Umfangsrand (12) und dem zweiten Umfangsrand (21) definiert ist, wobei eine Rücklinie des Kühlgebläses (91), die sich in einer Luftströmungszone befindet, als eine zweite Bezugslinie (B) definiert ist; wobei sich die mehreren ersten länglichen Öffnungen (33) und die mehreren zweiten länglichen Öffnungen (43) in einem Bereich zwischen der ersten Bezugslinie (A) und der zweiten Bezugslinie (B) befinden; wenn sich das Kühlgebläse (91) dreht, die Außenluft aus den mehreren ersten länglichen Öffnungen (33) und den mehreren zweiten länglichen Öffnungen (43) in den Unterbringungskasten gesaugt wird.

7. Luftaufblasvorrichtung gemäß Anspruch 4, **dadurch gekennzeichnet, dass** die erste Platte (10) der Kappe (1) einen ersten Befestigungsfortsatz (34) aufweist, der sich an einer Innenwand davon erstreckt und so konfiguriert ist, dass er die Luft leitet und den Motor (92) des Luftkompressors (9) befestigt, und die zweite Platte (20) des Gehäuses (2) einen zweiten Befestigungsfortsatz (44) aufweist, der sich an einer Innenwand davon erstreckt und so konfiguriert ist, dass er die Luft leitet und den Motor (92) des Luftkompressors (9) befestigt; der erste Befestigungsfortsatz (34) aufweist eine geneigte Fläche (341), die in dessen Mitte ausgebildet ist, eine erste geneigte Umrandung (342), die sich von einem ersten Ende der geneigten Fläche (341) zu dem ersten Umfangsrand (12) erstreckt, eine zweite geneigte Umrandung (343), die sich von einem zweiten Ende der geneigten Fläche (341) zum ersten Umfangsrand (12) erstreckt, wobei die geneigte Fläche (341), die erste geneigte Umrandung (342) und die zweite geneigte Umrandung (343) die Luft nach vorne leiten, wobei eine Struktur des zweiten Befestigungsfortsatzes (44) gleich derjenigen des ersten Befestigungsfortsatzes (34) ist.

8. Luftaufblasvorrichtung gemäß Anspruch 7, **dadurch gekennzeichnet, dass** die erste Platte (10) der Kappe (1) ein erstes bogenförmiges Blatt (35) aufweist, das sich von einer Innenwand davon erstreckt, und die zweite Platte (20) des Gehäuses (2) ein zweites bogenförmiges Blatt (36) aufweist, das sich von einer Innenwand davon erstreckt und dem ersten bogenförmigen Blatt (35) entspricht.

9. Luftaufblasvorrichtung gemäß Anspruch 2, **dadurch gekennzeichnet, dass** die erste Ausnehmung (71) des ersten Leitabschnitts (7) auf einer ersten Platte (610) der Kappe (61) definiert ist, und die erste halbkreisförmige Abdeckung (72) einstückig auf der ersten Ausnehmung (71) ausgebildet ist, wobei die erste halbkreisförmige Abdeckung (72) bogenförmig ist, die Kappe (1) ferner mehrere erste längliche Öffnungen (73) aufweist, die separat auf einer Seite eines ersten Umfangsrandes (611) der ersten Platte (610) ausgebildet sind, und der erste Umfangsrand (611) dem ersten Leitabschnitt (7) gegenüberliegt.

10. Luftaufblasvorrichtung gemäß Anspruch 9, **dadurch gekennzeichnet, dass** das Gehäuse (2) in einer rechteckigen Rahmenform ausgebildet ist und eine Fluidführungsstruktur enthält, die den zweiten Leitabschnitt (4) aufweist, der gleich dem ersten Leitabschnitt (3) ist, wobei eine Struktur des zweiten Leitabschnitts (8) mit der des ersten Leitabschnitts (7) identisch ist, wobei der zweite Leitabschnitt (8) die zweite Ausnehmung (81), die auf einer zweiten Platte (620) des Gehäuses (62) definiert ist, und die zweite halbkreisförmige Abdeckung (82) aufweist, die einstückig an der zweiten Ausnehmung (81) ausgebildet ist, wobei die zweite halbkreisförmige Abdeckung (82) bogenförmig ist und mehrere zweite längliche Öffnungen (83) separat an einer Seite eines zweiten Umfangsrandes (621) der zweiten Platte (620) ausgebildet sind, wobei der zweite Umfangsrand (621) dem zweiten Leitabschnitt (8) gegenüberliegt.

## Revendications

1. Un dispositif de gonflage à l'air comprenant : un boîtier de logement et un compresseur d'air (9), le boîtier de logement comprenant un capot (1, 61) et un boîtier (2, 62), et le compresseur d'air (9) étant reçu dans le capot (1, 61) et le boîtier (2, 62), un mécanisme de guidage d'air étant également reçu dans le boîtier de logement et étant configuré pour servir de structure porteuse à un ventilateur de refroidissement (91) qui est rotatif avec un moteur (92) du compresseur d'air (9), dans lequel
le capot (1, 61) et le boîtier (2, 62) forment un orifice d'écoulement (5),
le capot (1, 61) comprend une structure de guidage de fluide qui a une première partie dirigeante (3, 7),
le boîtier (2, 62) comprend une structure de guidage de fluide qui présente une deuxième partie dirigeante (4, 8) identique à la première partie dirigeante (3, 7), **caractérisé en ce que** la première partie dirigeante (3, 7) a un premier évidement (31, 71) et un premier couvercle semicirculaire (32, 72) s'étend sur le premier évidement (31, 71) et la deuxième partie dirigeante (4, 8) a un deuxième évidement (41, 81), et un deuxième couvercle semi-circulaire (42, 82) s'étend sur le deuxième évidement (41, 81), dans lequel
le premier couvercle semi-circulaire (32, 72) et le deuxième couvercle semi-circulaire (42, 82) du mécanisme de guidage d'air sont configurés pour collecter et guider l'air de sorte que le ventilateur de refroidissement (91) tourne pour guider l'air vers le compresseur d'air (9), dissipant ainsi la chaleur du compresseur d'air (9).

2. Le dispositif de gonflage à l'air selon la revendication 1, **caractérisé en ce que** le capot (1) est formé en forme de structure rectangulaire et comprend un premier panneau (10) formé sur une partie supérieure du capot (1), un bouton (11) situé à côté du premier panneau (10) et configuré pour activer/désactiver (mettre sur on / sur off) le compresseur d'air (9), et une structure de guidage de fluide qui a une première partie dirigeante (3).

3. Le dispositif de gonflage à l'air selon la revendication 2, **caractérisé en ce que** le premier évidement (31) est défini sur un côté d'une première frange périphérique (12) du capot (1), et le premier couvercle semi-circulaire (32) présente une première nervure (321) et une première clôture arquée (322), le capot (1) comprenant en outre une pluralité de premiers orifices allongés (33) formés séparément sur la première clôture arquée (322), et le premier couvercle semi-circulaire (32) est formé d'un seul tenant avec le capot (1).

4. Le dispositif de gonflage à l'air selon la revendication 3, **caractérisé en ce que** le boîtier (2) est formé en forme de structure rectangulaire, et le deuxième évidement (41) est défini sur un côté de la deuxième frange périphérique (21) du boîtier (2), le deuxième évidement (41) est en dessous d'un deuxième panneau (20) d'une partie supérieure du boîtier (2), le deuxième couvercle semi-circulaire (42) présentant une deuxième nervure (421) et une deuxième clôture arquée (422) ; le capot (1) comprend en outre une pluralité de premiers orifices allongés (43) formés séparément sur la première clôture arquée (422), et le deuxième couvercle semi-circulaire (42) est formé d'un seul tenant avec le boîtier (2).

5. Le dispositif de gonflage à l'air selon la revendication 4, **caractérisé en ce que** le compresseur d'air (9) est reçu dans le capot (1) et le boîtier (2), évitant ainsi un choc du ventilateur de refroidissement (91).

6. Le dispositif de gonflage à l'air selon la revendication 5, **caractérisé en ce qu'**une première ligne de référence (A) est définie entre la première frange périphérique (12) et la deuxième frange périphérique (21), une ligne arrière du ventilateur de refroidissement (91) située dans une zone d'écoulement d'air est définie comme une deuxième ligne de référence (B) ; dans lequel la pluralité de premiers orifices allongés (33) et la pluralité de deuxièmes orifices allongés (43) sont situées dans une zone se trouvant entre la première ligne de référence (A) et la deuxième ligne de référence (B) ; lorsque le ventilateur de refroidissement (91) tourne, l'air extérieur est aspiré dans le boîtier de réception à partir des multiples premiers orifices allongés (33) et une pluralité de deuxièmes orifices allongés (43).

7. Le dispositif de gonflage à l'air selon la revendication 4, **caractérisé en ce que** le premier panneau (10) du capot (1) présente une première extension de fixation (34) s'étendant sur une paroi intérieure de celui-ci et configurée pour guider l'air et pour fixer le moteur (92) du compresseur d'air (9), et le deuxième panneau (20) du boîtier (2) présente une deuxième extension de fixation (44) s'étendant sur une paroi intérieure de celui-ci et configurée pour guider l'air et pour fixer le moteur (92) du compresseur d'air (9) ; la première extension de fixation (34) présente une face inclinée (341) formée sur son centre, une première barrière inclinée (342) s'étendant d'une première extrémité de la face inclinée (341) à la première frange périphérique (12), une deuxième barrière inclinée (343) s'étendant d'une deuxième extrémité de la face inclinée (341) à la première frange périphérique (12), la face inclinée (341), la première barrière inclinée (342) et la deuxième barrière inclinée (343) guidant l'air vers l'avant, la structure de la deuxième extension de fixation (44) étant identique à celle de la première extension de fixation (34).

8. Le dispositif de gonflage à l'air selon la revendication 7, **caractérisé en ce que** le premier panneau (10) du capot (1) comporte une première feuille arquée (35) s'étendant à partir d'une paroi intérieure de celui-ci, et le deuxième panneau (20) du boîtier (2) comporte une deuxième feuille arquée (36) s'étendant à partir d'une paroi intérieure de celui-ci et correspondant à la première feuille arquée (35).

9. Le dispositif de gonflage à l'air selon la revendication 2, **caractérisé en ce que** le premier évidement (71) de la première partie dirigeante (7) est défini sur un premier panneau (610) du capot (61), et le premier couvercle semi-circulaire (72) est formé d'un seul tenant sur le premier évidement (71), le premier couvercle semi-circulaire (72) étant arqué, le capot (1) comprenant en outre une pluralité de premiers orifices allongés (73) formés séparément sur un côté d'une première frange périphérique (611) du premier panneau (610), et la première frange périphérique (611) est tourné vers la première partie dirigeante (7).

10. Le dispositif de gonflage à l'air selon la revendication 9, **caractérisé en ce que** le boîtier (2) est sous la forme d'une structure rectangulaire et comprend une structure de guidage de fluide ayant la deuxième partie dirigeante (4) identique à la première partie dirigeante (3), une structure de la deuxième partie dirigeante (8) étant identique à celle de la première partie dirigeante (7), la deuxième partie dirigeante (8) incluant le deuxième évidement (81) défini sur un deuxième panneau (620) du boîtier (62), et le deuxième couvercle semi-circulaire (82) formé d'un seul tenant sur le deuxième évidement (81), le deuxième couvercle semi-circulaire (82) étant arqué, et une pluralité de deuxièmes orifices allongés (83) étant formés séparément sur un côté d'une deuxième frange périphérique (621) du deuxième panneau (620), la deuxième frange périphérique (621) étant tournée vers la deuxième partie dirigeante (8).
